# NEUE EUROPÄISCHE PATENTSCHRIFT

(11) **EP 0 983 462 B2**
(45) Veröffentlichungstag und Bekanntmachung des Hinweises auf die Entscheidung über den Einspruch: **30.08.2006**
(45) Hinweis auf die Patenterteilung: 17.10.2001
(21) Anmeldenummer: 98930686.5
(22) Anmeldetag: 13.05.1998
(51) Int. Cl.: F16L 37/084, F16L 37/12

(54) **LÖSBARE SCHNELLKUPPLUNG**
DETACHABLE RAPID-ACTION COUPLING DEVICE
DISPOSITIF DE RACCORDEMENT RAPIDE AMOVIBLE

(30) Priorität: 30.05.1997 DE 19722842
(43) Veröffentlichungstag der Anmeldung: 08.03.2000
(73) Patentinhaber: A. Raymond & Cie, F-38028 Grenoble-Cédex (FR)
(72) Erfinder: TREDE, Michael, F-68170 Rixheim (FR); MORETTI, Erminio, F-38000 Grenoble (FR); LETORT, David, F-38000 Grenoble (FR)
(74) Vertreter: Rüttgers, Joachim
(86) Internationale Anmeldenummer: PCT/EP1998/002815
(87) Internationale Veröffentlichungsnummer: WO 1998/054503

(56) Entgegenhaltungen:
- EP-A- 0 605 801
- CH-A- 643 931
- DE-A- 2 611 233
- DE-A- 3 741 250
- DE-C- 3 790 414
- DE-C- 4 107 603
- DE-U- 8 407 268
- US-A- 5 069 489
- US-A- 5 542 717

## Beschreibung

Die Erfindung betrifft eine lösbare Schnellkupplung gemäß dem Oberbegriff der Patentansprüche 1, und 3.

Eine derartige lösbare Schnellkupplung ist aus der EP-B-0 605 801 bekannt. Derartige Schnellkupplungen werden u.a. im Kraftfahrzeugbau verwendet, um Kraftstoffleitungen untereinander oder mit an Kraftstoffbehälter oder -verteiler angeformten oder sonstwie befestigten Einsteckteilen zu verbinden. Hierbei kommt es nicht nur auf eine einfache und montagefreundliche Handhabung sowie eine absolut dichte Verbindung nach dem Einrasten des Einsteckteils im Kupplungsgehäuse an, sondern die Kupplung muß sich im Bedarfsfall auch wieder leicht lösen lassen, was mit der Erfindung zugrundeliegenden Schnellkupplung hervorragend erreicht wird.

Die Form des Kupplungsgehäuses wird hierbei unter anderem bestimmt von den örtlichen Gegebenheiten an der Anschlußstelle, wobei die Gehäuse nicht immer in geradliniger Verlängerung vom Einsteckteil ausgeführt werden können, sondern aufgrund beengter Platzverhältnisse und der Verlegungsrichtung der Kraftstoffleitungen auch abgewinkelte Formen benötigt werden. Dabei kann es passieren, daß die Druckplatten der Halteelemente nur schwer zugänglich sind und die Kupplung nicht ohne weiteres gelöst werden kann.

Aus US-A-5,542,717 ist eine Schnellkupplung bekannt, bei der ein in ein Aufnahmegehäuse einfügbares Einsteckteil über eine zylinderförmige Kappe unlösbar mit dem Aufnahmegehäuse verbindbar ist, wobei die zylinderförmige Kappe über eine umfänglich angeordnete, Rastrillen und Rastkanten aufweisende Rastverbindung drehbar mit dem Aufnahmegehäuse verbunden ist.

Der Erfindung liegt die Aufgabe zugrunde, eine lösbare Schnellkupplung der eingangs genannten Art anzugeben, bei der auch bei einer abgewinkelte Ausgestaltung das Halteelement zum Lösen der Verbindung zwischen dem Aufnahmegehäuse und dem Einsteckteil einfach zugänglich ist und das Aufnahmegehäuse weiterhin stabil ist.

Diese Aufgabe wird bei einer lösbaren Schnellkupplung der eingangs genannten Art erfindungsgemäß in verschiedenen Ausgestaltungen mit den kennzeichnenden Merkmalen der Patentansprüche 1 und 3 gelöst.

Durch die erfindungsgemäßen zweiteiligen Ausgestaltungen des Aufnahmegehäuses lässt sich das das Halteelement aufnehmende Kopfteil gegenüber dem Grundkörper verdrehen, so dass das Halteelement für ein einfaches Betätigen positionierbar ist, wobei Elemente des Grundkörpers und des Kopfteiles so miteinander in Eingriff sind, dass sich eine hohe Stabilität insbesondere gegenüber einem Verkippen des Kopfteiles und des Grundkörpers in Bezug aufeinander ergibt-Hierbei sind zur Herstellung der Steckverbindung zwei Möglichkeiten vorgesehen, welche in der Zeichnung dargestellt sind und anhand der nachfolgenden Zeichnungsbeschreibung näher erläutert werden sollen.

Es zeigt
- Fig. 1: das Aufnahmegehäuse einer Schnellkupplung mit Einbauteilen in einer perspektivischen Explosionsdarstellung,
- Fig. 2: das Aufnahmegehäuse mit Einsteckteil vor dem Eindrücken,
- Fig. 3: das Kopfteil eines zweigeteilten Aufnahmegehäuses im Schnitt,
- Fig. 4: der zugehörige Grundkörper im Schnitt,
- Fig. 5: das zusammengesteckte Aufnahmegehäuse in Seitenansicht mit Teilschnitt im Verrastungsbereich,
- Fig. 6: das Kopfteil einer anderen Ausführungsform eines zweigeteilten Aufnahmegehäuses in einer Ansicht in Richtung des Pfeiles A,
- Fig. 7: das gleiche Kopfteil in Seitenansicht,
- Fig. 8: einen Schnitt durch das Kopfteil gemäß Linie VIII - VIII in Fig. 6,
- Fig. 9: der zugehörige Grundkörper im Längsschnitt,
- Fig. 10: einen Längsschnitt durch das Aufnahmegehäuse im zusammengebauten Zustand,
- Fig. 11: das gleiche Aufnahmegehäuse mit Einbauteilen im fertig montierten Zustand mit Einsteckteil vor dem Eindrücken und
- Fig. 12: das gleiche Aufnahmegehäuse nach dem Eindrücken des Einsteckteils, wobei die Schnittebene um 90° gedreht ist.

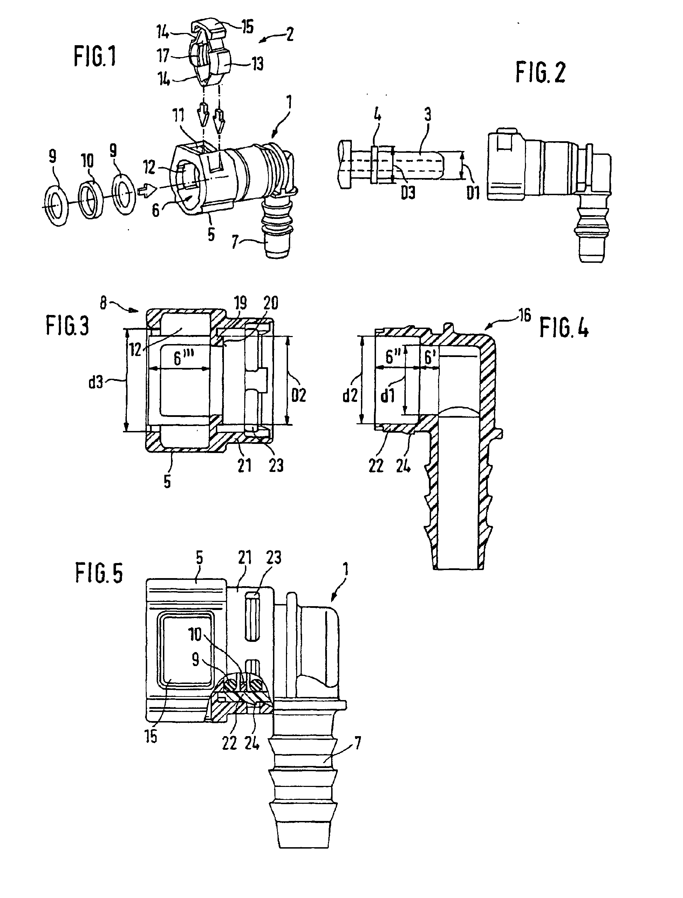

Die in den Figuren dargestellte Schnellkupplung besteht, wie aus **Fig. 1** ersichtlich**,** aus einem Aufnahmegehäuse **1** aus Kunststoff mit einem rohrförmigen Stutzen **7** zum Anschluß einer nicht dargestellten Flüssigkeitsleitung und einem zylindrischen Aufnahmeraum **6** zum Einführen und Verkuppeln eines rohrförmigen Einsteckteils **3** mit einer umlaufenden Halterippe **4** (vergleiche **Fig. 2,** links).

Das Einsteckteil **3** kann hierbei sowohl das Ende eines stabilen Metallrohres sein, welches beispielsweise für Kraftstoffleitungen verwendet wird. Es kann aber auch genau wie das Aufnahmegehäuse - aus starrem Kunststoff oder anderem Spritzgießmaterial bestehen, welches in gleicher Weise wie der Stutzen **7** des Aufnahmegehäuses mit einer Flüssigkeitsleitung verbindbar ist oder aber an einem Kraftstoffbehälter bzw. -verteiler angeformt oder in sonstiger Weise befestigt ist.

Im vorderen Bereich des Aufnahmeraums **6** befindet sich ein Halteelement **2** aus hartelastischem Kunststoff, welches durch eine Öffnung in der zylindrischen Gehäusewand **5** in den Aufnahmeraum **6** einführbar ist. Dieses Halteelement **2** weist zwei kreisbogenförmig nach innen gerichtete Haltekanten **17** auf, weiche die Halterippe **4** nach dem Eindrücken des Einsteckteils **3** in bekannter Weise hintergreifen und so das Einsteckteil **3** im Gehäuse **1** verkuppeln.

Die Haltekanten **17** sind zu diesem Zweck an zwei nach außen abstehende Stützkörper **13** angeformt, welche ihrerseits im eingebauten Zustand des Halteelements **2** in entsprechende Aussparungen **12** der Gehäusewand **5** eintauchen und dort mit ebenfalls kreisbogenförmigen Stirnflächen **18** entgegen der Einsteckrichtung gehalten werden. Die Stützkörper **13** sind an ihren Enden über V-förmig zusammengeführte Federstege **14** untereinander verbunden, wobei eine der Verbindungsstellen mit einer etwa rechteckigen Druckplatte **15** abgedeckt ist, welche in den Außenkanten geringfügig schmaler ist als die Gehäuseöffnung **11.** Weitere Einzelheiten des Halteelements **2** sowie dessen verrastende Wirkung beim Einführen des Einsteckteils **3** sind in der **EP 0 605 801 B1** beschrieben, auf deren Inhalt Bezug genommen wird.

Das Aufnahmegehäuse **1** ist erfindungsgemäß zweiteilig ausgebildet und besteht, wie aus **Fig. 3 bis 5** ersichtlich, aus einem Kopfteil **8** und einem Grundkörper **16,** welcher im vorliegenden Ausführungsbeispiel mit einem rechtwinklig abgeknicktem Stutzen **7** versehen ist. Kopfleil **8** und Grundkörper **16** sind in axialer Richtung zusammensteckbar und verbindbar ausgebildet, wobei das Kopfteil **8** an der Einsteckseite einen Zentrierring **19** aufweist, welcher in seinem Außendurchmesser **D2** dem Innendurchmesser **d2** des Grundkörpers **16** entspricht.

Am Kopfteil **8** ist konzentrisch zum Zentrierring **19** eine äußere Hülse **21** angeformt, welche sich beim Andrücken des Kopfteils **8** an den Grundkörper **16** über dessen Außenwand **22** schiebt. Die Hülse **21** ist an ihrer Innenseite mit einer Rastrille **23** versehen, welche mit einer an der Außenwand **22** angeformten, umlaufenden Rastkante **24** verrastbar ist. Die Rastrille **23** weist zweckmäßigerweise mehrere, über den Umfang gleichmäßig verteilte, nach außen offene Durchbrüche **25** auf, damit das sichere Einrasten der Rastkante **24** besser kontrolliert werden kann.

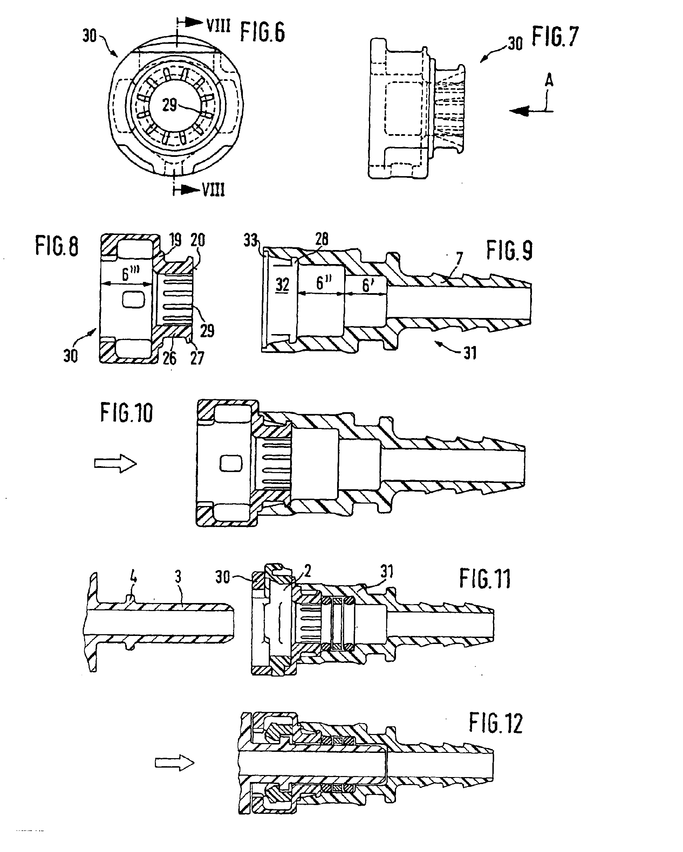

Wie aus **Fig. 3 und 4** ersichtlich, besteht der Aufnahmeraum 6 aus drei stufenweise abgesetzten Abschnitten. Hierbei weist der im Grundkörper **16** innenliegende Abschnitt **6'** einen Innendurchmesser **d1** auf, welcher dem Außendurchmesser **D1** des Einsteckteils **3** entspricht. Dem schließt sich nach außen, d.h. zur Einsteckseite hin, ein zweiter Abschnitt **6"** an, dessen Innendurchmesser **d2** dem Außendurchmesser **D2** des Zentrierrings **19** entspricht. Dieser zweite Abschnitt **6"** dient zur Aufnahme von zwei Dichtungsringen **9** sowie einem Zwischenring **10,** welche in **Fig. 1** vorder Öffnung **11** und in **Fig. 5** im eingebauten Zustand dargestellt sind. Der dritte, vordere Abschnitt **6"'** befindet sich im Kopfteil **8** und weist im Eingangsbereich einen Innendurchmesser **d3** auf, welcher dem Außendurchmesser D3 der Halterippe **4** entspricht.

Bei dem in den **Fig. 6 bis 12** dargestellten Ausführungsbeispiel besteht das Gehäuse aus einem Kopfteil **30** und einem Grundkörper **31.** Das Kopfteil besitzt ebenfalls eine Rasthülse **26,** welche aber im Unterschied zum Ausführungsbeispiel nach **Fig. 3** am Zentrierring **19** angeformt ist und an ihrem freien Ende einen nach außen abstehenden Wulst **27** aufweist. Dementsprechend ist am Grundkörper **31** vor dem Ende des mittleren Abschnitts **6"** ein Einführbereich **32** vorgelagert, und am Ende des Abschnitts **6"** eine Rille **28** vorgesehen, weiche in Breite und Tiefe dem Wulst 27 angepaßt ist.

Beim Zusammenfügen von Kopfteil **30** und Grundkörper **31** rastet der Wulst **27** in die Rille **28** des Grundkörpers **31** ein, während gleichzeitig der Zentrierring **19** in eine entsprechende Zentrierhülse **33** am Anfang des Einführbereichs **32** eingreift.

Damit sich die Rasthülse **26** beim Eindrücken in den trichterförmigen Einführbereich **23** leichter zusammenziehen kann, ist die Rasthülse **26** von ihrer Stirnseite **20** ab über die ganze Länge durch mehrere über den Umfang gleichmäßig verteilte Schlitze **29** unterbrochen.

Diese Art der Verrastung des Kopfteils **30** im Grundkörper **31** hat neben der Verdrehbarkeit den weiteren Vorteil, daß nach dem Einführen des Einsteckteils **3** in den Aufnahmeraum **6** die geschlitzte Rasthülse **26** nach innen abgestützt ist, so daß der Wulst **27** in der Rille **28** sicher verankert ist und das Kopfteil gegen hohe Abzugskräfte gesichert ist.

## Patentansprüche

1. Lösbare Schnellkupplung zur Aufnahme eines rohrförmigen Einsteckteils (3) mit einer umlaufenden Halterippe (4), bestehend aus einem Aufnahmegehäuse (1) mit einem ebenfalls rohrförmigen Stutzen (7) zum Anschluß einer Flüssigkeitsleitung und einem zylindrischen Aufnahmeraum (6) zum Einführen des Einsteckteils (3) sowie aus einem separaten Halteelement (2) aus hartelastischem Kunststoff mit kreisbogenförmig nach innen gerichteten, elastisch auffederbaren Haltekanten (17) zum Hintergreifen der Halterippe (4) nach dem Eindrücken des Einsteckteils (3), wobei das Halteelement (2) durch eine Öffnung (11) in der zylindrischen Gehäusewand (5) des Aufnahmegehäuses (1) in den Aufnahmeraum (6) einführbar, mit den Haltekanten (17) in axialer Richtung zur Gehäusewand (5) festlegbar und zum Lösen des Einsteckteils (3) im Öffnungsbereich (11) der Gehäusewand (5) von außen eindrückbar ist und wobei der Aufnahmeraum (6) aus drei stufenweise abgesetzten Abschnitten besteht, wovon der erste, innenliegende Abschnitt (6') im Innendurchmesser (d1) dem Außendurchmesser (D1) des Einsteckteils (3) entspricht, der zweite, sich nach außen hin anschließende mittlere Abschnitt (6") zur Aufnahme von mindestens einem Dichtungsring (9) für das Einsteckteil (3) bestimmt ist und der dritte, vordere Abschnitt (6"') im Eingangsbereich einen Innendurchmesser (d3) entsprechend dem Außendurchmesser (D3) der Halterippe (4) aufweist, **dadurch gekennzeichnet, daß** das Aufnahmegehäuse (1) zweiteilig mit einem Kopfteil (8, 30) und mit einem Grundkörper (16, 31) ausgebildet ist, daß das den vorderen Abschnitt (6"') enthaltende und das Halteelement (2) aufnehmende Kopfteil (8, 30) mit dem Grundkörper (16, 31) in axialer Richtung zusammensteckbar und, verbindba ist und an der Einsteckseite mit einem Zentrierring (19) ausgebildet ist, welcher in seinem Außendurchmesser (D2) dem Innendurchmesser (d2) des Grundkörpers (16) entspricht und dessen Stirnfläche (20) gleichzeitig als Abschluß für den mittleren Abschnitt (6") dient, daß die Verbindung durch Rastelemente (23/24 beziehungsweise 27/28) derart hergestellt ist, daß das Kopfteil (8,30) auf einer Außenwand (22) des Grundkörpers (16, 31) verdrehbar gehalten ist, wobei am Kopfteil (8) konzentrisch zum Zentrierring (19) eine äußere Hülse (21) angeformt ist, welche sich beim Andrücken des Kopfteils (8) an den Grundkörper (16) über dessen Außenwand (22) unter Anlage der Innenseite der Außenwand (22) des Grundkörpers (16) an der Außenseite des Zentrierringes (19) schiebt, und wobei das Kopfteil (8) an seiner Innenseite mit einer Rastrille (23) versehen ist, die mit einer an der Außenwand (22) des Grundkörpers (16) angeformten, umlaufenden Rastkante (24) verrastbar ist.

2. Lösbare Schnellkupplung nach Anspruch 1, **dadurch gekennzeichnet, daß** die Rastrille (23) mehrere, über den Umfang gleichmäßig verteilte, nach außen offene Durchbrüche (25) aufweist.

3. Lösbare Schnellkupplung zur Aufnahme eines rohrförmigen Einsteckteils (3) mit einer umlaufenden Halterippe (4), bestehend aus einem Aufnahmegehäuse (1) mit einem ebenfalls rohrförmigen Stutzen (7) zum Anschluß einer Flüssigkeitsleitung und einem zylindrischen Aufnahmeraum (6) zum Einführen des Einsteckteils (3) sowie aus einem separaten Halteelement (2) aus hartelastischem Kunststoff mit kreisbogenförmig nach innen gerichteten, elastisch auffederbaren Haltekanten (17) zum Hintergreifen der Halterippe (4) nach dem Eindrücken des Einsteckteils (3), wobei das Halteelement (2) durch eine Öffnung (11) in der zylindrischen Gehäusewand (5) des Aufnahmegehäuses (1) in den Aufnahmeraum (6) einführbar, mit den Haltekanten (17) in axialer Richtung zur Gehäusewand (5) festlegbar und zum Lösen des Einsteckteils (3) im Öffnungsbereich (11) der Gehäusewand (5) von außen eindrückbar ist und wobei der Aufnahmeraum (6) aus drei stufenweise abgesetzten Abschnitten besteht, wovon der erste, innenliegende Abschnitt (6') im Innendurchmesser (d1) dem Außendurchmesser (D1) des Einsteckteils (3) entspricht, der zweite, sich nach außen hin anschließende mittlere Abschnitt (6") zur Aufnahme von mindestens einem Dichtungsring (9) für das Einsteckteil (3) bestimmt ist und der dritte, vordere Abschnitt (6"') im Eingangsbereich einen Innendurchmesser (d3) entsprechend dem Außendurchmesser (D3) der Halterippe (4) aufweist, **dadurch gekennzeichnet , daß** das Aufnahmegehäuse (1) zweiteilig mit einem Kopfteil (8, 30) und mit einem Grundkörper (16, 31) ausgebildet ist, daß das den vorderen Abschnitt (6"') enthaltende und das Halteelement (2) aufnehmende Kopfteil (8, 30) mit dem Grundkörper (16, 31) in axialer Richtung zusammensteckbar und verbindbar ist und an der Einsteckseite mit einem Zentrierring (19) ausgebildet ist dessen Stirnfläche (20) gleichzeitig als Abschluß für den mittleren Abschnitt (6") dient, daß die Verbindung durch Rastelemente (23/24 beziehungsweise 27/28) derart hergestellt ist, daß das Kopfteil (8,30) auf einer Außenwand (22) des Grundkörpers (16, 31) verdrehbar gehalten ist, wobei am Zentrierring (19) des Kopfteils (30) eine Rasthülse (26) angeformt ist, die an ihrem freien Ende einen nach außen abstehenden Wulst (27) aufweist, welcher in eine entsprechend breite und tiefe Rille (28) des Grundkörpers (31) am Ende des mittleren Abschnitts (6") einrastbar ist, wobei der Zentrierring (19) in eine am Anfang eines am Grundkörper (31) vor dem Ende des mittleren Abschnitts (6'') vorgelagerten Einführbereiches (32) angeordnete Zentrierhülse (33) eingreift.

4. Lösbare Schnellkupplung nach Anspruch 3, **dadurch gekennzeichnet, daß** die Rasthülse (25) von ihrer Stirnseite (20) ab über die ganze Länge durch mehrere, über den Umfang verteilte Schlitze (29) unterbrochen ist.

## Claims

1. A releasable quick-action coupling for receiving a tubular plug-in member (3) having a peripheral holding rib (4), comprising a receiving housing (1) with a connection portion (7) which is also tubular for the connection of a fluid line and a cylindrical receiving space (6) for the introduction of the plug-in member (3), and a separate holding element (2) of hard-elastic plastics material with arcuately inwardly directed holding edges (17) which can be elastically sprung open for engaging behind the holding rib (4) after the plug-in member (3) has been pressed in, wherein the holding element (2) can be introduced into the receiving space (6) through an opening (11) in the cylindrical wall (5) of the receiving housing (1), it can be fixed with the holding edges (17) in the axial direction with respect to the wall (5) of the housing, and it can be pressed in from the exterior to release the plug-in member (3) in the region (11) of the opening in the wall (5) of the housing, and wherein the receiving space (6) comprises three portions set back in a stepped configuration of which the first inwardly disposed portion (6') corresponds in inside diameter (d1) to the outside diameter (D1) of the plug-in member (3), the second, outwardly adjoining central portion (6") is intended to receive at least one sealing ring (9) for the plug-in member (3) and the third front portion (6") in the entry region is of an inside diameter (d3) corresponding to the outside diameter (D3) of the holding rib (4), **characterised in that** the receiving housing (1) is of a two-part configuration with a head portion (8, 30) and with a main body (16, 31), that the head portion (8, 30) which includes the front portion (6"') and which receives the holding element (2) can be fitted together and joined to the main body (16, 31) in the axial direction and at the plug-in end is configured with a centring ring (19) which corresponds in its outside diameter (D2) to the inside diameter (d2) of the main body (16), and the front face (20) of which serves at the same time as the closure for the central portion (6"), that the connection is produced by detent elements (23/24) and (27/28) respectively, in such a way that the head portion (8, 30) is held rotatably on an outside wall (22) of the main body (16, 31), wherein formed on the head portion (8) concentrically with respect to the centring ring (19) is an outer sleeve (21), which, when the head portion (8) is pressed against the main body (16), is pushed over the outside wall (22) thereof by virtue of the inside of the outside wall (22) of the main body (16) bearing against the outside of the centring ring (19), and wherein at its inside the head portion (8) is provided with a detent groove (23) which is latchable to a peripheral detent edge (24) formed on the outside wall (22) of the main body (16).

2. A releasable quick-action coupling according to Claim 1, **characterised in that** the detent groove (23) has a plurality of outwardly open apertures (25) which are uniformly distributed around the periphery.

3. A releasable quick-action coupling for receiving a tubular plug-in member (3) having a peripheral holding rib (4), comprising a receiving housing (1) with a connection portion (7) which is also tubular for the connection of a fluid line and a cylindrical receiving space (6) for the introduction of the plug-in member (3), and a separate holding element (2) of hard-elastic plastics material with arcuately inwardly directed holding edges (17) which can be elastically sprung open for engaging behind the holding rib (4) after the plug-in member (3) has been pressed in, wherein the holding element (2) can be introduced into the receiving space (6) through an opening (11) in the cylindrical wall (5) of the receiving housing (1), it can be fixed with the holding edges (17) in the axial direction with respect to the wall (5) of the housing, and it can be pressed in from the exterior to release the plug-in member (3) in the region (11) of the opening in the wall (5) of the housing, and wherein the receiving space (6) comprises three portions set back in a stepped configuration of which the first inwardly disposed portion (6') corresponds in inside diameter (d1) to the outside diameter (D1) of the plug-in member (3), the second, outwardly adjoining central portion (6") is intended to receive at least one sealing ring (9) for the plug-in member (3) and the third front portion (6"') in the entry region is of an inside diameter (d3) corresponding to the outside diameter (D3) of the holding rib (4), **characterised in that** the receiving housing (1) is of a two-part configuration with a head portion (8, 30) and with a main body (16, 31), that the head portion (8, 30) which includes the front portion (6"') and which receives the holding element (2) can be fitted together and joined to the main body (16, 31) in the axial direction and at the plug-in end is configured with a centring ring (19) whose end face (20) serves at the same time as the closure for the central portion (6"), that the connection is made by detent elements (23/24) and (27/28) respectively, in such a way that the head portion (8, 30) is held rotatably on the outside wall (22) of the main body (16, 31), wherein formed on the centring ring (19) of the head portion (30) is a detent sleeve (26) which at its free end has an outwardly projecting ridge (27) which is engageable into a groove (28) of corresponding width and depth in the main body (31) at the end of the central portion (6"), wherein the centring ring (19) engages into a centring sleeve (33) which is arranged at the start of an insertion region (32) which is mounted upstream of the end of the central portion (6").

4. A releasable quick-action coupling according to Claim 3, **characterised in that** from the end (20) thereof the detent sleeve (25) is interrupted over the entire length thereof by a plurality of slots (29) which are distributed around the periphery.

## Revendications

1. Raccord rapide détachable destiné à recevoir un élément tubulaire mâle (3) muni d'une nervure de retenue périphérique (4), se composant d'un élément récepteur femelle (1), muni d'un embout également tubulaire (7) pour le raccordement d'une conduite de liquide et d'un logement d'emmanchement cylindrique (6) pour l'introduction de l'élément tubulaire mâle (3) ainsi que d'un élément de retenue séparé (2), en matière plastique à cédage élastique dur, comprenant des arêtes de retenue (17) capables de se déformer par cédage élastique, orientées vers l'intérieur selon un tracé en arc de cercle, destinées à venir cramponner par derrière la nervure de retenue (4) après l'emmanchement par pression de l'élément tubulaire mâle (3), l'élément de retenue (2) étant en l'occurrence destiné à être introduit, par une ouverture (11) ménagée dans la paroi (5) de l'élément récepteur femelle (1), dans le logement d'emmanchement (6), à être immobilisé en position au moyen des arêtes de retenue (17), dans le sens axial par rapport à la paroi (5) de l'élément récepteur femelle et, pour dégager l'élément tubulaire mâle (3), à être comprimé depuis l'extérieur dans la zone d'ouverture (11) de la paroi (5) de l'élément récepteur femelle, le logement d'emmanchement cylindrique (6) se composant en l'occurrence de trois portions étagées en gradins successifs, le diamètre intérieur (d1) de la première portion intérieure (6') correspondant au diamètre extérieur (D1) de l'élément mâle (3), la deuxième portion médiane (6") succédant à celle-ci en direction de l'extérieur étant destinée à recevoir au moins une bague d'étanchéité (9) pour l'élément tubulaire mâle (3) et la troisième portion antérieure (6'") correspondant à la zone d'entrée, ayant un diamètre intérieur (d3) correspondant au diamètre extérieur (D3) de la nervure de retenue (4), **caractérisé en ce que** l'élément récepteur femelle (1) présente une configuration en deux parties se composant d'un élément formant tête (8, 30) et d'un corps principal (16, 31), **en ce que** la partie formant tête (8, 30) comprenant la portion antérieure (6'") et recevant l'organe de retenue (2) est destinée à être assemblée et raccordée dans le sens axial avec le corps principal (16, 31) et présente sur le côté emmanchement une bague de centrage (19), dont le diamètre extérieur (D2) correspond au diamètre intérieur (d2) du corps principal (16) et dont la face antérieure (20) fait en même temps office d'obturateur pour la portion médiane (6"), **en ce que** la liaison de raccordement est réalisée par des éléments d'accrochage (23/24 ou 27/28), dans des conditions telles que l'élément formant tête (8, 30) est maintenu en position sur la paroi extérieure (22) du corps principal (16, 31), avec la possibilité de tourner, une douille extérieure (21) étant réalisée solidaire par formage de l'élément formant tête (8), selon une disposition concentrique par rapport à la bague de centrage (19), qui, lors de l'application sous pression de l'élément formant tête (8) sur le corps principal (16) glisse au-dessus de sa paroi extérieure (22), la face intérieure de la paroi extérieure (22) du corps principal (16) venant en l'occurrence prendre appui sur le côté extérieur de la bague de centrage (19) et l'élément formant tête étant en l'occurrence muni, sur sa face intérieure, d'une rainure d'accrochage (23), qui est destinée à venir en prise d'encastrement avec une arête d'accrochage périphérique (24), réalisée solidaire par formage de la paroi extérieure (22) du corps principal (16).

2. Raccord rapide détachable selon la revendication 1, **caractérisé en ce que** la rainure d'accrochage (23) comporte plusieurs ouvertures débouchantes (25) ouvertes en direction de l'extérieur, réparties de manière régulière sur la périphérie.

3. Raccord rapide détachable destiné à recevoir un élément tubulaire mâle (3) muni d'une nervure de retenue périphérique (4), se composant d'un élément récepteur femelle (1), muni d'un embout également tubulaire (7) pour le raccordement d'une conduite de liquide et d'un logement d'emmanchement cylindrique (6) pour l'introduction de l'élément tubulaire mâle (3) ainsi que d'un élément de retenue séparé (2), en matière plastique à cédage élastique dur, comprenant des arêtes de retenue (17) capables de se déformer par cédage élastique, orientées vers l'intérieur selon un tracé en arc de cercle, destinées à venir cramponner par derrière la nervure de retenue (4) après l'emmanchement par pression de l'élément tubulaire mâle (3), l'élément de retenue (2) étant en l'occurrence destiné à être introduit, par une ouverture (11) ménagée dans la paroi (5) de l'élément récepteur femelle (1), dans le logement d'emmanchement (6), à être immobilisé en position au moyen des arêtes de retenue (17), dans le sens axial par rapport à la paroi (5) de l'élément récepteur femelle et, pour dégager l'élément tubulaire mâle (3), à être comprimé depuis l'extérieur dans la zone d'ouverture (11) de la paroi (5) de l'élément récepteur femelle et le logement d'emmanchement cylindrique (6) se composant en l'occurrence de trois portions étagées en gradins successifs, le diamètre intérieur (d1) de la première portion intérieure (6') correspondant au diamètre extérieur (D1) de l'élément mâle (3), la deuxième portion médiane (6'') succédant à celle-ci en direction de l'extérieur étant destinée à recevoir au moins une bague d'étanchéité (9) pour l'élément tubulaire mâle (3) et la troisième portion antérieure (6'") correspondant à la zone d'entrée, ayant un diamètre intérieur (d3) correspondant au diamètre extérieur (D3) de la nervure de retenue (4), **caractérisé en ce que** l'élément récepteur femelle (1) présente une configuration en deux parties se composant d'un élément formant tête (8, 30) et d'un corps principal (16, 31), **en ce que** la partie formant tête (8, 30) comprenant la portion antérieure (6'") et recevant l'organe de retenue (2) est destinée à être assemblée et raccordée dans le sens axial avec le corps principal (16, 31) et présente sur le côté emmanchement une bague de centrage (19), dont la face antérieure (20) fait en même temps office d'obturateur pour la portion médiane (6"), **en ce que** la liaison de raccordement est réalisée par des éléments d'accrochage (23/24 ou 27/28), dans des conditions telles que l'élément formant tête (8, 30) est maintenu en position sur la paroi extérieure (22) du corps principal (16, 31), avec la possibilité de tourner, une douille d'accrochage (26) étant en l'occurrence réalisée solidaire par formage de la bague de centrage (19) de l'élément formant tête (30), qui comporte au niveau de son extrémité libre un bourrelet (27) faisant saillie vers l'extérieur qui est destiné à être engagé en prise d'encastrement, à l'extrémité de la portion médiane (6") dans une rainure (28) ménagée dans le corps principal (31), d'une largeur et d'une profondeur étudiées en correspondance, la bague de centrage (19) venant en l'occurrence en prise d'engagement avec une douille de centrage (33) disposée dans la zone d'emmanchement (32) se trouvant en amont de l'extrémité de la portion médiane (6").

4. Raccord rapide détachable selon la revendication 3, **caractérisé en ce que** la douille d'accrochage (26), à partir de sa face antérieure (20), présente, sur toute sa longueur, des solutions de continuité consistant en plusieurs fentes (29) réparties sur son pourtour.
